(19) Europäisches Patentamt
European Patent Office
Office européen des brevets

(11) **EP 3 927 094 A1**

(12) **EUROPEAN PATENT APPLICATION**
published in accordance with Art. 153(4) EPC

(43) Date of publication:
**22.12.2021 Bulletin 2021/51**

(51) Int Cl.:
***H04W 74/08*** *(2009.01)*

(21) Application number: **19920020.5**

(22) Date of filing: **19.03.2019**

(86) International application number:
**PCT/CN2019/078782**

(87) International publication number:
**WO 2020/186465 (24.09.2020 Gazette 2020/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **SHI, Cong**
**Dongguan, Guangdong 523860 (CN)**

(74) Representative: **Taor, Simon Edward William et al**
**Venner Shipley LLP**
**200 Aldersgate**
**London EC1A 4HD (GB)**

(54) **METHOD FOR TWO-STEP RANDOM ACCESS, TERMINAL DEVICE AND NETWORK DEVICE**

(57) Provided are a method for random access, a terminal device and a network device. The method comprises: a terminal device sending, to a network device, a preamble and a cell radio network temporary identifier media access control control element (C-RNTI MAC CE), wherein the C-RNTI MAC CE comprises a C-RNTI; the terminal device performing blind detection on a physical downlink control channel (PDCCH) scrambled by the C-RNTI; and the terminal device determining, according to a blind detection result of the C-RNTI, whether contention-collision in a two-step random access process has been solved. In the embodiments of the present application, the network device sends, according to a decoding result of the preamble and a decoding result of the C-RNTI MAC CE, the PDCCH to the terminal device, such that the terminal device can determine, by means of performing the blind detection on the PDCCH scrambled by the C-RNTI, whether contention-collision in the two-step random access process has been solved.

Network device | Terminal device

S210, A preamble and a C-RNTI MAC CE, wherein the C-RNTI MAC CE comprises a C-RNTI

S220, Decode the preamble and the C-RNTI MAC CE

S230, Send, according to a decoding result of the preamble and a decoding result of the C-RNTI MAC CE, a PDCCH to the terminal device

S240, Perform blind detection on the PDCCH scrambled by the C-RNTI

S250, Determine, according to a blind detection result of the C-RNTI, whether contention-collision in a two-step random access process has been solved

FIG.7

EP 3 927 094 A1

## Description

### TECHNICAL FIELD

The embodiments of the present application relate to the field of communication, and more particularly, to a method for random access, a terminal device and a network device.

### BACKGROUND

Currently, a two-step random access procedure is in a standardization discussion procedure, and is in a research stage. The two-step random access may improve time delay and reduce signaling overhead.

Specifically, the two-step random access procedure may include a first step and a second step. The first step includes: a terminal device sending a message A (msgA) to a network device. The msgA is composed of a preamble and a payload. The preamble is a preamble of a four-step random access procedure, and is transmitted on a PRACH resource. The payload may carry information in msg3 of the four-step random access procedure, and is transmitted by a PUSCH. The second step includes: the terminal device receiving a message B (msgB) sent by the network device, where the msgB may include msg2 and msg4 in the four-step random access procedure.

However, since the msgA may be shared by a plurality of terminal devices, it is necessary to consider an issue of a contention conflict and how to resolve the contention conflict.

### SUMMARY

There are provided a method for random access, a terminal device and a network device, which can effectively resolve a conflict in a two-step RACH.

In a first aspect, there is provided a method for two-step random access, the method including:

sending, by a terminal device, a preamble and a cell radio network temporary identifier medium access control control element (C-RNTI MAC CE) to a network device, where the C-RNTI MAC CE includes a C-RNTI;

blindly detecting, by the terminal device, a physical downlink control channel (PDCCH) scrambled by the C-RNTI; and

determining, by the terminal device, whether a contention conflict in a two-step random access procedure has been resolved according to a blind detection result of the C-RNTI.

In the embodiments of the present application, the network device sends the PDCCH to the terminal device according to a decoding result of the preamble and a decoding result of the C-RNTI MAC CE, and then the terminal device may determine whether the contention conflict in the two-step random access procedure has been resolved by blindly detecting the PDCCH scrambled by the C-RNTI. Specifically, if the PDCCH scrambled by the C-RNTI was blindly detected out, it means that the contention conflict in the two-step random access procedure has been resolved, and if the PDCCH scrambled by the C-RNTI was not blindly detected out, it means that the contention conflict in the two-step random access procedure has not been resolved.

In a second aspect, there is provided a method for two-step random access, the method including:

receiving, by a network device, a preamble and a cell radio network temporary identifier medium access control control element (C-RNTI MAC CE) sent by a terminal device, where the C-RNTI MAC CE includes a C-RNTI;

decoding, by the network device, the preamble and the C-RNTI MAC CE; and

sending, by the network device, a physical downlink control channel (PDCCH) to the terminal device according to a decoding result of the preamble and a decoding result of the C-RNTI MAC CE.

In a third aspect, there is provided a terminal device for executing the method in the first aspect or in each implementation thereof. Specifically, the terminal device includes a functional module configured to execute the method in the first aspect or each implementation thereof.

In a fourth aspect, there is provided a network device for executing the method in the second aspect or in each implementation thereof. Specifically, the network device includes a functional module configured to execute the method in the second aspect or each implementation thereof.

In a fifth aspect, there is provided a terminal device including a processor and a memory, where the memory is configured to store a computer program, and the processor is configured to call and run the computer program stored in the memory to execute the method in the first aspect or in each implementation thereof.

In a sixth aspect, there is provided a network device including a processor and a memory, where the memory is configured to store a computer program, and the processor is configured to call and run the computer program stored in the memory to execute the method in the second aspect or in each implementation thereof.

In a seventh aspect, there is provided a chip configured to implement the method in any one of the first aspect to the second aspect or each implementation thereof. Specifically, the chip includes: a processor, configured to call and run a computer program from a memory, so that a device installed with the chip executes the method in any one of the first aspect to the second aspect or in each implementation thereof.

In an eighth aspect, is provided a computer-readable storage medium for storing a computer program, where the computer program enables a computer to execute the method in any one of the first aspect to the second aspect or any of in each implementation thereof.

In a ninth aspect, there is provided a computer program product including a computer program instruction, where the computer program instruction enables a computer to execute the method in any one of the first aspect to the second aspect or in each implementation thereof.

In a tenth aspect, there is provided a computer program, the computer program, when running on a computer, enables the computer to execute the method in any one of the first aspect to the second aspect or in each implementation thereof.

## BRIEF DESCRIPTION OF THE DRAWINGS

FIG. 1 is an example of an application scenario of the present application.
FIG. 2 is a schematic flowchart of contention random access according to an embodiment of the present application.
FIG. 3 is a schematic block diagram of an MAC PDU according to an embodiment of the present application.
FIG. 4 is a schematic block diagram of a BI subheader according to an embodiment of the present application.
FIG. 5 is a schematic block diagram of an RAPID subheader according to an embodiment of the present application.
FIG. 6 is a schematic block diagram of an MAC RAR according to an embodiment of the present application.
FIG. 7 is a schematic flowchart of a method for two-step random access according to an embodiment of the present application.
FIG. 8 is a schematic block diagram of a terminal device according to an embodiment of the present application.
FIG. 9 is a schematic block diagram of a network device according to an embodiment of the present application.
FIG. 10 is a schematic block diagram of a communication device according to an embodiment of the present application.
FIG. 11 is a schematic block diagram of a chip according to an embodiment of the present application.

## DETAILED DESCRIPTION

The technical solutions in the embodiments of the present application will be described below in conjunction with the drawings in the embodiments of the present application. Obviously, the described embodiments are part of the embodiments of the present application, rather than all of them. Based on the embodiments in the present application, all the other embodiments obtained by those of ordinary skill in the art without creative labor fall within the protection scope of the present application.

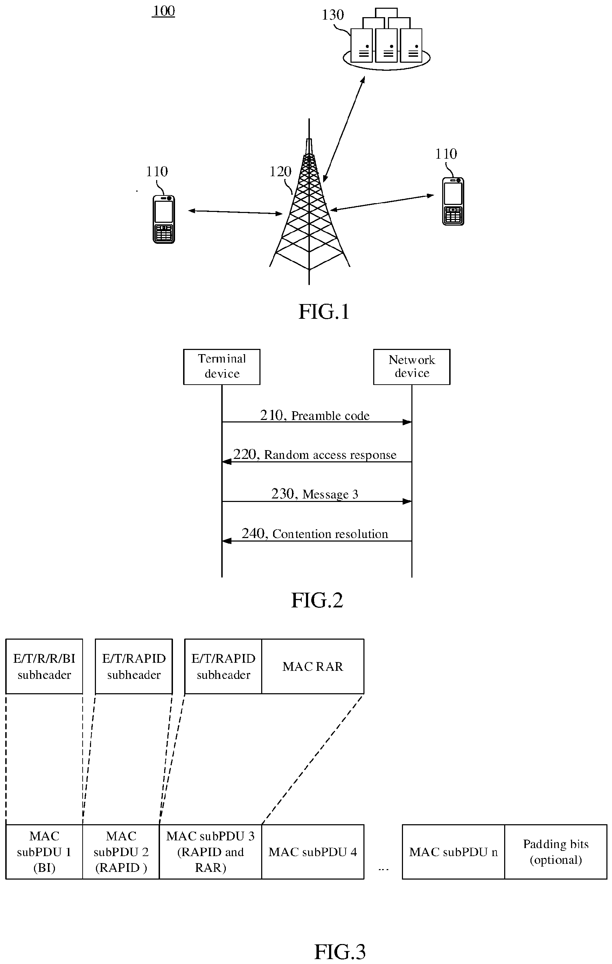

FIG. 1 is an example of an application scenario of the present application.

As illustrated in FIG. 1, a communication system 100 may include a terminal device 110 and a network device 120. The network device 120 may communicate with the terminal device 110 through an air interface. Multi-service transmission is supported between the terminal device 110 and the network device 120.

It should be understood that the embodiments of the present application only take the communication system 100 as an example for exemplary description, but the embodiments of the present application are not limited thereto. That is, the technical solutions in the embodiments of the present application may be applied to various communication systems, such as a Global System of Mobile communication (GSM) system, a Code Division Multiple Access (CDMA) system, a Wideband Code Division Multiple Access (WCDMA) system, General Packet Radio Service (GPRS), a Long Term Evolution (LTE) system, LTE Time Division Duplex (TDD), a Universal Mobile Telecommunication System (UMTS), a Worldwide Interoperability for Microwave Access (WiMAX) communication system, a New Radio (NR) or a 5G system in future, etc.

Taking the 5G system as an example, the main application scenarios of 5G include: Enhance Mobile Broadband (eMBB), Ultra-Reliable and Low Latency Communication (URLLC), massive machine type of communication (mMTC). The target of the eMBB is to obtain multimedia content, services and data for user, and its demand is growing rapidly. Since the eMBB may be deployed in different scenarios, such as indoor, urban, rural, etc., and its capabilities and requirements vary greatly, it may be analyzed in detail in conjunction with specific deployment scenarios rather than generalization. The typical applications of the URLLC include industrial automation, power automation, telemedicine operation (surgery), traffic safety guarantee, etc. The typical characteristics of the URLLC include high connection density, small data amount, delay-insensitive services, low cost and long service life of modules, etc.

Since it is difficult to acquire a complete 5G NR coverage, the network coverage in the embodiments of the present application may use modes of wide-area Long Term Evolution (LTE) coverage and NR island coverage. At the same time, in order to protect the mobile operators' early investment in the LTE, a tight interworking mode between the LTE and the NR may further be used.

In the communication system 100 illustrated in FIG. 1, the network device 120 may be an access network device communicating with the terminal device 110. The access network device may provide communication coverage for a specific geographic area, and may communicate with the terminal device 110 (for example, a UE) located in this coverage area.

Optionally, the network device 120 may be a Base Transceiver Station (BTS) in the Global System of Mobile communication (GSM) system or Code Division Multiple Access (CDMA), it may also be a NodeB (NB) in the Wideband Code Division Multiple Access (WCDMA) system, and the network device 120 may also be an Evolutional Node B (eNB or eNodeB) in the Long Term Evolution (LTE). Optionally, the network device 120 may also be a gNB in a Next Generation Radio Access Network (NG RAN) or a NR system, or a wireless controller in Cloud Radio Access Network (CRAN), or the access network device may be a relay station, an access point, an in-vehicle device, a wearable device, a hub, a switch, a bridge, a router, or a network device in future evolved Public Land Mobile Network (PLMN), etc.

Optionally, the terminal device 110 may be any terminal device, including but being not limited to a connection via a wired line, such as via a Public Switched Telephone Network (PSTN), a Digital Subscriber Line (DSL), a digital cable, a direct cable connection; and/or another data connection/network; and/or via a wireless interface, for example, a transmitter for a cellular network, a Wireless Local Area Network (WLAN), a digital TV network such as a DVB-H network, a satellite network and an AF-FM broadcast; and/or an apparatus of another terminal device which is arranged to receive/send communication signals; and/or an Internet of Things (IoT) device. The terminal device arranged to communicate via the wireless interface may be referred to as a "wireless communication terminal", a "wireless terminal" or a "mobile terminal". Examples of the mobile terminals include, but are not limited to, a satellite or cellular phone; a Personal Communications System (PCS) terminal that may combine a cellular wireless phone with data procedure, fax and data communication capabilities; a PDA that may include a radio phone, a pager, an Internet/intranet access, a Web browser, a memo pad, a calendar, and/or a Global Positioning System (GPS) receiver; and a conventional laptop and/or a palmtop receiver or other electric apparatus including a radiophone transceiver. The terminal device may refer to an access terminal, the User Equipment (UE), a user unit, a user station, a mobile station, a mobile platform, a remote station, a remote terminal, a mobile device, a user terminal, a terminal, a wireless communication device, a user agent or a user apparatus. The access terminal may be a cellular phone, a cordless phone, a Session Initiation Protocol (SIP) phone, a Wireless Local Loop (WLL) station, the personal digital assistant (PDA), a handheld device with wireless communication function, a computing device or other processing devices connected to wireless modems, the in-vehicle device, the wearable device, a terminal device in 5G network or a terminal device in the future evolved PLMN, etc.

Optionally, Device to Device (D2D) communication may be performed between the terminal devices 110.

The wireless communication system 100 may also include a core network device 130 communicating with the network device 120. The core network device 130 may be a 5G Core (5GC) device, for example, an Access and Mobility Management Function (AMF), for another example, an Authentication Server Function (AUSF), for another example, a User Plane Function (UPF), and for another example, a Session Management Function (SMF). Optionally, the core network device 130 may also be an Evolved Packet Core (EPC) device of LTE network, for example, a Session Management Function + Core Packet Gateway (SMF+PGW- C) device. It should be understood that SMF+PGW-C may simultaneously realize functions that the SMF and the PGW-C can realize.

Optionally, in the communication system 100, a communication between individual functional units may be realized by establishing a connection through a next generation (NG) interface.

For example, the terminal device establishes an air interface connection with the access network device through an NR interface to transmit user plane data and control plane signaling; the terminal device may establish a control plane signaling connection with the AMF through an NG interface 1 (abbreviated as N1); the access network device, such as the next generation wireless access base station (gNB), may establish a user plane data connection with the UPF through an NG interface 3 (abbreviated as N3); the access network device may establish a control plane signaling connection with the AMF through an NG interface 2 (abbreviated as N2); the UPF may establish a control plane signaling connection with the SMF through an NG interface 4 (abbreviated as N4); the UPF may exchange the user plane data with data network through an NG interface 6 (abbreviated as N6); the AMF may establish a control plane signaling connection with the SMF through an NG interface 11 (abbreviated as N11); and the SMF may establish a control plane signaling connection with a PCF through an NG interface 7 (abbreviated as N7). It should be noted that the part illustrated in FIG. 2 is only an exemplary architecture diagram. In addition to functional units illustrated in FIG. 1, this network architecture may also include other functional units or functional entities, for example, the core network device may also include other functional units such as a unified data management (UDM) function, which is not specifically limited in the embodiments of the present application.

FIG. 1 exemplarily illustrates one base station, one core network device and two terminal devices. Optionally, the wireless communication system 100 may include a plurality of base station devices and coverage of each base station may include other numbers of terminal devices, which is not limited in the embodiments of the present application.

It should be understood that the terms "system" and "network" are often used interchangeably herein. The term "and/or" herein is only to describe a kind of association relationship among associated objects, and means that there may be three kinds of relationships. For example, A and/or B may mean that there are the following three cases: A exists alone, A and B exist at the same time, and B exists alone. In addition, the character "/" herein generally indicates that the associated objects are in an "or" relationship.

Contention random access in the embodiments of the present application will be described below in conjunction with FIG. 2.

FIG. 2 is a schematic flowchart of the contention random access according to an embodiment of the present application.

It should be understood that after a cell search procedure, the terminal device has achieved downlink synchronization with a cell, so the terminal device can receive downlink data. However, the terminal device can perform uplink transmission only if it has achieved uplink synchronization with the cell. The terminal device establishes a connection with the cell through a Random Access Procedure and achieves the uplink synchronization.

The main objectives of random access are:

Initial access from RRC IDLE;
RRC Connection Re-establishment procedure;
Handover;
DL or UL data arrival during RRC_CONNECTED when UL synchronisation status is "non-synchronised";
UL data arrival during RRC_CONNECTED when there are no PUCCH resources for SR available;
SR failure;
Request by RRC upon a synchronous reconfiguration;
Transition from RRC INACTIVE;
To establish time alignment at SCell addition;
Request for Other SI;

Beam failure recovery.

As illustrated in FIG. 2, in the embodiments of the present application, a contention random access procedure includes the following steps.

In 210, the terminal device sends a preamble to the network device to tell the network device that there is a random access request, and at the same time enables the network device to estimate a transmission delay between the network device and the terminal device and to calibrate uplink timing based on the transmission delay. The preamble may also be referred to as a preamble code.

Specifically, the terminal device selects a preamble index and a Physical Random Access Channel (PRACH) resource for sending the preamble; thus, the Preamble is transmitted on the PRACH.

The network device may broadcast a System Information Block (SIB) to notify contention random access resources (for example, an SIB1) of all terminal devices. In addition, each cell has 64 available preamble sequences, and the terminal device may select one of them (or designated by the network device) to be transmitted on the PRACH. These sequences may be divided into two parts, one part is for contention-based random access, and the other part is for non-contention-based random access.

In 220, the network device sends a Random Access Response (RAR) to the terminal device.

Specifically, after sending the preamble, the terminal device may monitor a corresponding Physical Downlink Control Channel (PDCCH) according to a Random Access Radio Network Temporary Identifier (RA-RNTI) value within a time window for monitoring the RAR, so as to receive the RAR corresponding to the RA-RNTI. It is considered that this random access procedure has failed if no RAR replied by the network device was received within this RAR time window. It should be understood that both the terminal device and the eNB need to uniquely determine the RA-RNTI value, otherwise the terminal device cannot decode the RAR. Optionally, in the embodiments of the present application, the RA-RNTI may calculate the RA-RNTI value by a time-frequency position of the Preamble that is clear to both the sender and the receiver.

Specifically, the RA-RNTI associated with the preamble is calculated by the following formula:

$$RA\text{-}RNTI = 1 + s\_id + 14 \times t\_id + 14 \times 80 \times f\_id + 14 \times 80 \times 8 \times ul\_carrier\_id,$$

where s_id is an index of the first OFDM symbol of a PRACH opportunity ($0 \leq s\_id < 14$), and t_id is an index of the first time slot of the PRACH opportunity in a system frame ($0 \leq t\_id < 80$). f_id is an index of the PRACH opportunity in a frequency domain ($0 \leq f\_id < 8$), and ul_carrier_id is a UL carrier for random access preamble transmission (0 means a NUL carrier, 1 means a SUL carrier).

In other words, since the time-frequency position of the preamble sent by the terminal device is certain, the network device acquires the time-frequency position of the preamble when decoding the preamble, and then knows the RA-RNTI needing to be used in the RAR. When the terminal device receives one RAR (decoding with the certain RA-RNTI) successfully, and the preamble index in the RAR is the same as the preamble index sent by the terminal device, it is considered that the RAR has been received successfully, and the terminal device may stop monitoring the RAR.

In the embodiments of the present application, the RAR may be carried in an MAC PDU. Information carried in the RAR will be introduced from the view of a structure of the MAC PDU including the RAR in conjunction with FIG. 3.

As illustrated in FIG. 3, an MAC Protocol Data Unit (PDU) may include a plurality of MAC subPDUs and possible padding bit(s).

Specifically, as illustrated in FIG. 3, the first MAC subPDU may be an E/T/R/R/BI subheader. The MAC subPDU following the E/T/R/R/BI subheader may include an E/T/RAPID subheader. Specifically, the MAC subPDU following the E/T/R/R/BI subheader may only include the E/T/RAPID subheader, or may include both the E/T/RAPID subheader and an MAC Random Access Response (RAR) corresponding to the E/T/RAPID subheader. For example, continuing to refer to FIG. 3, the second MAC subPDU only includes the E/T/RAPID subheader, and the third MAC subPDU includes both the E/T/RAPID subheader and the RAR corresponding to the E/T/RAPID subheader.

Note: the difference between the MAC PDU and the MAC RAR lies in that one MAC PDU contains one or more MAC RARs.

It can be seen from the structure of the MAC PDU that if random access requests from a plurality of terminal devices are detected on the same PRACH resource by the network device, these access requests may be responded to by one MAC PDU. The response of each random access request (corresponding to one preamble index) corresponds to one RAR. In other words, if a plurality of terminal devices send preambles on the same PRACH resource (the same time-frequency position, using the same RA-RNTI), the corresponding RARs are multiplexed in the same MAC PDU.

The MAC PDU is transmitted on a DL-SCH and is scheduled by the PDCCH scrambled by the RA-RNTI.

That is, all terminal devices that use the same PRACH resource to send preambles (not necessarily the same) monitor the same PDCCH scrambled by the RA-RNTI and receive the same MAC PDU, but UEs with different preamble indexes may find the corresponding RAR according to a corresponding RAPID value.

Since the MAC PDU may only be scrambled by one RA-RNTI, it also means that the RARs corresponding to the preambles sent with different PRACH resources (different time-frequency positions) may not be multiplexed in the same MAC PDU.

Continuing to refer to FIG. 3, one MAC header is composed of one or more MAC subheaders. In addition to a Backoff Indicator subheader, each subheader corresponds to one RAR.

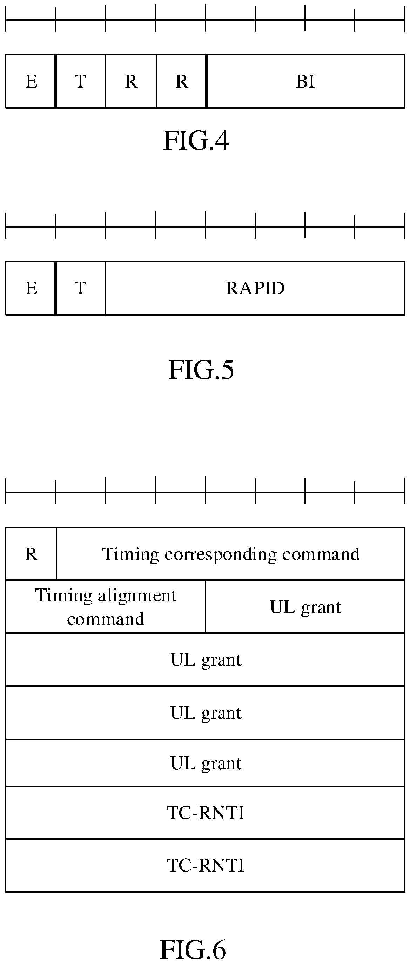

FIG. 4 is a schematic block diagram of a BI subheader according to an embodiment of the present application.

As illustrated in FIG. 4, the BI subheader may include one extension field (E), one type field (T), two reserved fields (R), and a BI value.

For the BI subheader, the BI subheader only appears once and is located at the first subheader of the MAC header. If the terminal device receives one BI subheader, it may save one Backoff value, which corresponds to the BI value in the subheader; otherwise, the terminal device may set the Backoff value to 0. The Backoff Indicator (BI) specifies a time range that the terminal device needs to wait before resending the preamble. If the terminal device does not receive the RAR within the RAR time window, or if there is no RAPID in the received RARs that matches the preamble selected by the terminal, it is considered that this RAR reception fails. At this time, the terminal device needs to wait for a period of time and then initiate random access. The waiting time is a random value selected in a waiting time interval specified from 0 to BI.

It should be noted that the time that the terminal device needs to wait before resending the preamble specified by the BI may conflict with physical layer timing.

In the embodiments of the present application, how to select a subframe to send the preamble may depend on implementation of the terminal device, or the physical layer timing is just "ready" to send, and the actual sending time is still determined by an MAC layer, which is not specifically limited by the embodiments of this application.

FIG. 5 is a schematic block diagram of an RAPID subheader according to an embodiment of the present application.

As illustrated in FIG. 5, a Random Access Preamble Identifier (RAPID) subheader may include one E, one T, and the RAPID value.

The Random Access Preamble Identifier (RAPID) is a preamble index acquired by the network device when detecting the preamble. If the terminal device found that the value is the same as the index used when sending the preamble by itself, it is considered that the corresponding RAR has been received successfully.

It should be understood that since the indication information is carried in the RAPID subheader, bit(s) for indicating whether the terminal device has the BI subheader in an original format is occupied.

FIG. 6 is a schematic block diagram of an MAC RAR according to an embodiment of the present application.

As illustrated in FIG. 6, the MAC RAR may include: a reserved bit R, a Timing alignment Command (TAC), an uplink grant (UL grant), and a temporal Cell Radio Network Temporary Identifier (TC-RNTI).

The timing alignment command (TAC) is used for specifying time adjustment amount required by the uplink synchronization of the terminal device, and may occupy 12 bits. The UL grant specifies an uplink resource allocated to Msg3. When there is uplink data transmission, for example, a conflict needs to be resolved, a grant allocated in the RAR by the network device may not be less than 56 bits. The TC-RNTI is used for subsequent transmission of the terminal device and the network device. After resolving the conflict, the value may become a C-RNIT.

In 230, the terminal device sends the message 3 (Msg3) to the network device. The terminal device may carry its own unique identifier in the Msg3, for example, the Cell Radio Network Temporary Identifier (C-RNTI), for another example, a terminal device identifier (S-TMSI or random number) from the core network.

In 240, the network device sends a contention resolution to the terminal device.

Specifically, the network device may carry a unique identifier of the winning terminal device in the contention resolution (Msg4) in a contention resolution mechanism. Other terminal devices that did not win in the conflict resolution may re-initiate random access.

The present application provides a random access method for a two-step access procedure to improve access efficiency.

That is, a two-step RACH is used to realize a four-step Random Access Channel (RACH) procedure illustrated in FIG. 2. Specifically, in the two-step RACH, msgA transmits msg1+msg3 in the four-step RACH, and msgB transmits msg2+msg4 in the four-step RACH.

More specifically, the two-step access procedure may include the following steps.

Step 1:

The terminal device sends msgA to the network device. The msgA is composed of a preamble and a payload. The preamble is the preamble of the four-step RACH, and the preamble is transmitted on a PRACH resource. The payload may carry information in the msg3 of the four-step RACH, such as RRC signaling in the idle status or inactive status of the RRC and the C-RNTI in connected status of the RRC, and the payload may be transmitted by the PUSCH. For example, the preamble may be transmitted by a pre-configured PRACH resource, and the payload may be transmitted by a pre-configured PUSCH channel.

Step 2:

The terminal device receives msgB sent by the network device. The msgB may include the msg2 and the msg4 of the four-step RACH.

However, since the msgA may be shared by a plurality of UEs, it is necessary to consider the problem of the conflict and how to resolve the conflict. In order to solve the above-mentioned problem, the embodiments of the present application provide a method for the contention random access, which can enable the terminal device to resolve an access conflict in the two-step RACH effectively. In the embodiments of this application, the payload may include one MAC CE; the MAC CE may include one ID, and the ID is the C-RNTI; that is, the terminal device may send one C-RNTI MAC CE to the network device, and the terminal device determines whether a contention conflict of the two-step random access has been resolved by a response message of the network device with respect to the C-RNTI MAC CE.

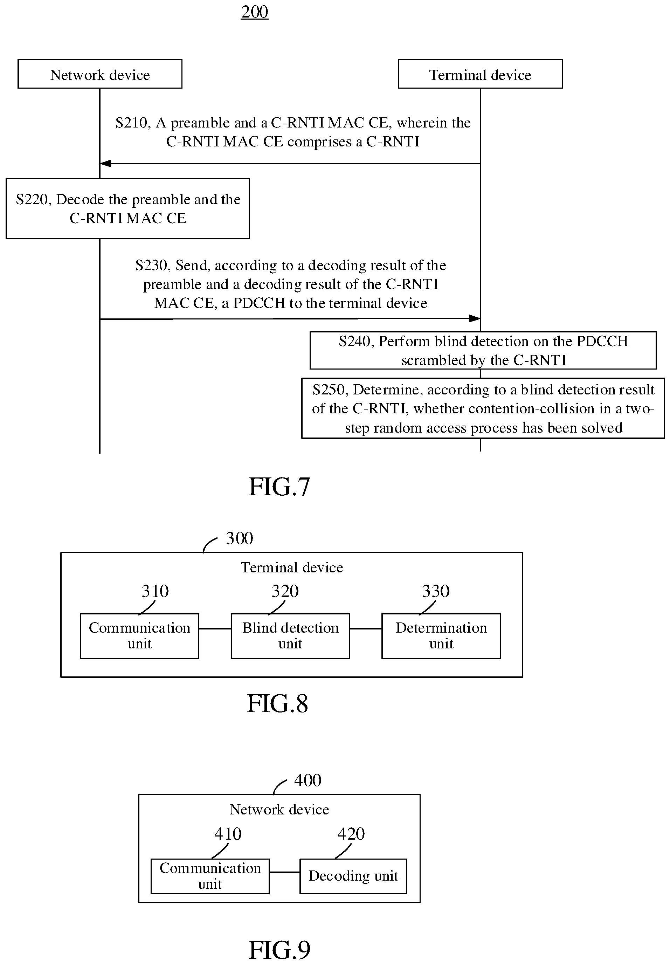

FIG. 7 is a schematic flowchart of a random access method 300 according to an embodiment of the present application.

As illustrated in FIG. 7, the method 300 may include the following steps.

In S210, the terminal device sends a preamble and a Cell Radio Network Temporary Identifier (C-RNTI) Media Access Control (MAC) control element (CE) to a network device, where the C-RNTI MAC CE includes a C-RNTI.

In S220, the network device decodes the preamble and the C-RNTI MAC CE.

In S230, the network device sends a Physical Downlink Control Channel (PDCCH) to the terminal device according to a decoding result of the preamble and a decoding result of the C-RNTI MAC CE.

In S240, the terminal device blindly detects the PDCCH scrambled by the C-RNTI.

In S250, the terminal device determines whether a contention conflict in a two-step random access procedure has been resolved according to a blind detection result of the C-RNTI.

The terminal device sends the preamble and the C-RNTI MAC CE to the network device, where the C-RNTI MAC CE includes the C-RNTI; the terminal device blindly detects the PDCCH scrambled by the C-RNTI; and the terminal device determines whether the contention conflict in the two-step random access procedure has been resolved according to the blind detection result of the C-RNTI. The network device receives the preamble and the C-RNTI MAC CE sent by the terminal device, and the network device decodes the preamble and the C-RNTI MAC CE; and the network device sends the PDCCH to the terminal device according to the decoding result of the preamble and the decoding result of the C-RNTI MAC CE.

In the embodiments of the present application, the network device sends the PDCCH to the terminal device according to the decoding result of the preamble and the decoding result of the C-RNTI MAC CE, and then the terminal device may determine whether the contention conflict in the two-step random access procedure has been resolved by blindly detecting the PDCCH scrambled by the C-RNTI. Specifically, if the PDCCH scrambled by the C-RNTI was blindly detected out, it means that the contention conflict in the two-step random access procedure has been resolved, and if the PDCCH scrambled by the C-RNTI was not blindly detected out, it means that the contention conflict in the two-step random access procedure has not been resolved.

Optionally, the terminal device may perform a blind detection on the PDCCH scrambled by the C-RNTI within a timer or a time window.

For example, the terminal device starts a first timer or a first time window after sending the preamble and/or the C-RNTI MAC CE to the network device; the preamble is sent on a PRACH resource, the C-RNTI MAC CE is sent on the PUSCH resource. At this time, the terminal device blindly detects the PDCCH scrambled by the C-RNTI after starting the first timer or within the first time window. Optionally, a duration of the timer or a duration of the time window is configured by the network device. In other words, the first timer or the first time window may be started after PRACH transmission, or after PUSCH transmission.

The duration of the timer or the duration of the time window may also be a pre-configured duration. For example, the duration of the timer or the duration of the time window may be a duration specified by a protocol, that is, for the terminal device and the network device, the duration of the timer and the duration of the time window may be predetermined durations.

In other words, the network device starts the first timer or the first time window after receiving a Physical Random Access Channel (PRACH) where the preamble is located and/or a PUSCH where the C-RNTI MAC CE is located; at this time, the network device sends the PDCCH to the terminal device according to the decoding result of the preamble and the decoding result of the C-RNTI MAC CE after starting the first timer or within the first time window. Similarly, the duration of the timer or the duration of the time window is information configured by the network device to the terminal device, and may also be the duration specified by the protocol, which is not specifically limited in the present application.

The specific implementation of S220 and S230 executed by the network device will be described in detail below.

In S230, after the terminal device sends the preamble and the C-RNTI MAC CE to the network device, the network device needs to receive and decode the preamble and the C-RNTI MAC CE in S220, and then the network device sends different PDCCHs (for example, PDCCHs including different information) according to different decoding conditions.

Specifically, in S220, results of decoding the preamble and the C-RNTI MAC CE by the network device may include the following three cases.

In a first case, the network device decodes one or more preambles successfully.

In a second case, the network device decodes one or more preambles as well as one or more C-RNTI MAC CEs successfully.

In a third case, the network device decodes the C-RNTI MAC CE successfully but fails to decode the preamble. Since the network device decodes the preamble first, and then decodes the C-RNTI MAC CE, the possibility of this case is relatively small.

In the first case, if the network device only decodes the preamble, the network device cannot distinguish the terminal device corresponding to the preamble. This is because that the preamble may correspond to a plurality of terminal devices, that is, the plurality of terminal devices use the same PRACH resource to transmit the preamble. At this time, the network device may or may not respond to the preamble. When the network device responds to the preamble, it sends an RAR in the four-step RACH to respond to the preamble, and at this time, the terminal device performing the two-step RACH may back off to the four-step RACH. When the network device does not respond to the preamble, the terminal device may re-execute the above S210, that is, the terminal device sends the preamble and the C-RNTI MAC CE to the network device, where the C-RNTI MAC CE includes the C-RNTI.

It should be noted that in this case, if the network device can distinguish that the terminal device corresponding to the decoded preamble is the terminal device performing the four-step RACH or the terminal device performing the two-step RACH (for example, by configuring different PRACH resources), the network device may also send indication information to make the terminal device performing the two-step RACH stop blindly detecting the PDCCH scrambled by the C-RNTI, so that the terminal device performing the two-step RACH can re-execute the above S210 as soon as possible.

In the second case, if the network device decodes the preamble and the C-RNTI MAC CE, the network device can at least distinguish the terminal device corresponding to an ID (for example, the C-RNTI) in the C-RNTI MAC. At this time, the network device can respond to the C-RNTI MAC CE, that is, the terminal device may send the PDCCH scrambled by the C-RNTI to the terminal device.

It should be noted that there is a certain association relationship between the PRACH carrying the preamble and the Physical Uplink Shared Channel (PUSCH) carrying the C-RNTI MAC CE. If the network device responds to the C-RNTI MAC CE, it is necessary to respond to the C-RNTI MAC CE based on the above association relationship. For example, if the C-RNTI MAC CE corresponding to the successfully decoded preamble is failed to be decoded, the network device may or may not respond to the preamble. If the C-RNTI MAC CE corresponding to the successfully decoded preamble is decoded successfully, the network device may respond to the C-RNTI MAC CE. Further, since a plurality of terminal devices may use the successfully decoded preamble at the same time, the network device may further respond to the successfully decoded preamble.

That is, when the network device decodes the preamble successfully but fails to decode the C-RNTI MAC CE, it sends the PDCCH used for scheduling the RAR corresponding to the preamble to the terminal device. For another example, when the network device decodes the preamble successfully and decodes the C-RNTI MAC CE successfully, it sends the PDCCH used for scheduling the RAR corresponding to the preamble to the terminal device; further, when the network device decodes the preamble successfully and decodes the C-RNTI MAC CE successfully, the network device may also send the PDCCH scrambled by the C-RNTI to the terminal device.

The specific implementation of S240 and S250 executed by the network device will be described in detail below.

First Embodiment:
In S250, the terminal device determines that the contention conflict has been resolved if the PDCCH scrambled by the C-RNTI was blindly detected out by the terminal device in S240.

Alternatively, the terminal device stops the first timer or stops blindly detecting the PDCCH scrambled by the C-RNTI within the first time window if the PDCCH scrambled by the C-RNTI was blindly detected out by the terminal device in S240.

At this time, the terminal device decodes Downlink Control Information (DCI) in the PDCCH; where the DCI includes scheduling information for scheduling downlink data or uplink data. Optionally, the DCI may also include a Timing alignment Command (TAC). Optionally, when the DCI includes scheduling information for scheduling a PDSCH, the PDSCH includes an MAC CE, and the MAC CE includes the Timing alignment Command (TAC). That is, the DCI may include the scheduling information for scheduling the downlink data, or the scheduling information for scheduling the uplink data, or both the scheduling information for scheduling the downlink data and the TAC, or the scheduling information for scheduling the uplink data and the TAC. The TAC is used for an uplink timing adjustment of the terminal device when performing the next uplink transmission.

In S250, the terminal device determines that the contention conflict has not been resolved if the PDCCH scrambled by the C-RNTI was not blindly detected by the terminal device in S240.

At this time, the terminal device reselects a resource for sending the preamble and/or the C-RNTI MAC CE, and resends the preamble and/or the C-RNTI MAC CE to the network device. That is, the terminal device re-executes S210 to re-perform the two-step random access procedure.

Second Embodiment:
The terminal device blindly detects the PDCCH scrambled by the C-RNTI, and blindly detects the PDCCH scrambled by the RA-RNTI. That is, the terminal device blindly detects both the PDCCH scrambled by the C-RNTI and the PDCCH scrambled by the RA-RNTI.

The method for determining the RA-RNTI by the terminal device may be the same as or different from the related art, which is not specifically limited in the embodiments of the present application. For example, the terminal device may determine the RA-RNTI according to a resource for transmitting the C-RNTI MAC CE and/or a resource for transmitting the preamble.

Taking the terminal device determining the RA-RNTI according to the resource for transmitting the preamble as an example, the terminal device may determine the RA-RNTI according to the following formula:

$$[00141] \qquad \text{RA-RNTI} = 1 + s\_id + 14 \times t\_id + 14 \times 80 \times f\_id + 14 \times 80 \times 8 \times ul\_carrier\_id,$$

where the s_id is an index of a first OFDM symbol of a PRACH opportunity ($0 \leq s\_id < 14$), and the t_id is an index of a first time slot of the PRACH opportunity in a system frame ($0 \leq t\_id < 80$). The f_id is an index of the PRACH opportunity in a frequency domain ($0 \leq f\_id < 8$), and the ul_carrier_id is an UL carrier for random access preamble transmission (0 means a NUL carrier, 1 means a SUL carrier). For an FDD, there is only one PRACH resource per subframe, so the f_id is fixed to 0.

As an embodiment, the terminal device continues to blindly detect the PDCCH scrambled by the C-RNTI if the PDCCH scrambled by the RA-RNTI was blindly detected out by the terminal device, and the RAR scheduled by the PDCCH scrambled by the RA-RNTI does not include an RAPID corresponding to the preamble

Further, if the PDCCH scrambled by the C-RNTI was blindly detected out by the terminal device before the time window ends or the timer times out, the terminal device determines that the contention conflict has been resolved successfully, and stops continuing to blindly detect the PDCCH scrambled by the C-RNTI. If the terminal device does not monitor the C-RNTI successfully, the terminal device re-executes 210, that is, the terminal device reselects a resource for sending the preamble and/or the C-RNTI MAC CE, and re-sends the preamble and/or the C-RNTI MAC CE to the network device. That is, the terminal device re-executes S210 to re-perform the two-step random access procedure.

As another embodiment, the terminal device stops blindly detecting the PDCCH scrambled by the C-RNTI if the PDCCH scrambled by the RA-RNTI was blindly detected out by the terminal device and the RAR scheduled by the PDCCH scrambled by the RA-RNTI includes the RAPID corresponding to the preamble.

In other words, the terminal device stops the timer or stops blindly detecting the PDCCH scrambled by the C-RNTI within the time window if the PDCCH scrambled by the RA-RNTI was blindly detected out by the terminal device and the RAR scheduled by the PDCCH scrambled by the RA-RNTI includes the RAPID corresponding to the preamble.

At this time, the terminal device regards the received RAR as msg2 in the four-step RACH procedure, and uses a UL GRANT scheduled in the RAR to transmit msg3, that is, the UE backs off to the four-step RACH procedure. That is, the terminal device backs off to step 3 in the four-step random access procedure, and sends a message 3 to the network device. For example, the terminal device acquires uplink gran (UL-Grant) information in the RAR; the terminal device sends the message 3 to the network device on a resource indicated by the UL-Grant information. Since the four-step random access procedure may be the same as the random access procedure in the related art, in order to avoid repetition, it will not be described here again.

Third Embodiment:
The terminal device continues to blindly detect the PDCCH scrambled by the C-RNTI if the PDCCH scrambled by the RA-RNTI was blindly detected out by the terminal device and the RAR scheduled by the PDCCH scrambled by the RA-RNTI includes an RAPID corresponding to the preamble.

Further, it is determined that the contention conflict has been resolved if the PDCCH scrambled by the C-RNTI was blindly detected out by the terminal device. The terminal device uses the RAR corresponding to the RAPID to send a message 3 to the network device if the PDCCH scrambled by the C-RNTI was not blindly detected out by the terminal device. That is, the terminal device backs off to step 3 in the four-step random access procedure, and sends the message 3 to the network device. For example, the terminal device acquires UL-Grant information in the RAR; the terminal device sends the message 3 to the network device on a resource indicated by the UL-Grant information. Since the four-step random access procedure may be the same as the random access procedure in the related art, in order to avoid repetition, it will not be described here again.

Further, the terminal device determines not to send the message 3 if the PDCCH scrambled by the C-RNTI was blindly detected out by the terminal device; and/or the terminal device determines to send the message 3 if the PDCCH scrambled by the C-RNTI was not blindly detected out by the terminal device.

In the embodiments of the present application, since the PDCCH scrambled by the RA-RNTI is blindly detected by the terminal device, and the RAR scheduled by the PDCCH scrambled by the RA-RNTI includes the RAPID corresponding to the preamble, the terminal device may continue to blindly detect the PDCCH scrambled by the C-RNTI. Therefore, the terminal device needs to determine whether to backs off to step 3 in the four-step random access procedure based on the blind detection result of the C-RNTI. That is, the terminal device needs to determine whether to send the message 3 to the network device.

In the present embodiment, the blindly detected PDCCH scrambled by the C-RNTI is used for implicitly indicating to the terminal device not to send the message 3. But the present application is not limited to this.

For example, in an alternative embodiment, the network device may also send indication information to the terminal device, for clearly indicating to the terminal device whether to send the message 3 to the network device. For example, the terminal device determines whether to send the message 3 to the network device according to first indication information, and the first indication information is carried in the PDCCH scrambled by the C-RNTI. That is, the terminal device determines whether to send the message 3 to the network device according to the first indication information in the PDCCH scrambled by the C-RNTI. The first indication information may also be carried in the downlink data scheduled by the PDCCH scrambled by the C-RNTI. For example, a PDSCH scheduled by the PDCCH scrambled by the C-RNTI may include an MAC CE, and the MAC CE may include the first indication information, which is not specifically limited by the embodiments of the present application.

In some embodiments of the present application, the RAR includes second indication information, where the second indication information is used for indicating whether to continue to blindly detect the PDCCH scrambled by the C-RNTI or whether to continue to acquire the RAPID included in the RAR corresponding to the RA-RNTI when the PDCCH scrambled by the RA-RNTI was blindly detected out by the terminal device.

Further, the second indication information is specifically used for indicating to continue to acquire the RAPID included in the RAR corresponding to the RA-RNTI when the PDCCH scrambled by the RA-RNTI was blindly detected out by the terminal device, and indicating to the terminal device whether to send the message 3 to the network device on the resource indicated by the UL-Grant information included in the RAR when the RAPID included in the RAR corresponding to the RA-RNTI is the same as the RAPID corresponding to the preamble.

In the embodiments of the present application, the terminal device may determine subsequent operation procedures clearly after the PDCCH scrambled by the RA-RNTI was blindly detected out based on the second indication information.

In an implementable manner, the second indication information may be carried in the RAR corresponding to the RAPID. For example, as illustrated in FIG. 6, which shows a RAR format in the existing four-step RACH, the second indication information may use the reserved bit R therein to indicate the following two cases:

First case: indicate to the UE to ignore the RAR and continue to monitor the C-RNTI.

Second case: indicate to the UE to regard the RAR as the msg2 of the four-step RACH, and use the UL GRANT in the RAR to transmit the msg3, so as to back off to the four-step RACH and stop monitoring the PDCCH scrambled by the C-RNTI.

In another implementable manner, the second indication information may be carried in a BI subheader of an MAC PDU of the RAR. For example, as illustrated in FIG. 4, one or two of the two reserved bits in the BI subheader of the MAC PDU of the RAR may be set as the second indication information.

For example, when one of the two reserved bits in the BI subheader of the MAC PDU of the RAR is set as the second indication information, if a value of the reserved bit is set to a first value (for example, 0), it means that the terminal device performing the two-step random access needs to continue to search for an RAPID header behind the RAR, and if there is a corresponding RAPID header, it directly backs off to the four-step random access procedure. If the value of the reserved bit is set to a second value (for example, 1), it means that the terminal device performing the two-step random access does not need to continue to search for the RAR (this may save the UE's overhead), and further continues to blindly detect the PDCCH scrambled by C-RNTI in the window and/or the timer.

For another example, when the two reserved bits in the BI subheader of the MAC PDU of the RAR are both set as the second indication information, a combination of the two reserved bits may indicate four cases, some possible indicated cases include the following cases.

A case in the second embodiment:
The terminal device continues to blindly detect the PDCCH scrambled by the C-RNTI if the PDCCH scrambled by the RA-RNTI was blindly detected out by the terminal device and the RAR scheduled by the PDCCH scrambled by the RA-RNTI does not include the RAPID corresponding to the preamble.

The terminal device stops blindly detecting the PDCCH scrambled by the C-RNTI if the PDCCH scrambled by the RA-RNTI was blindly detected out by the terminal device, and the RAR scheduled by the PDCCH scrambled by the RA-RNTI includes the RAPID corresponding to the preamble.

A case in the third embodiment:
The terminal device continues to blindly detect the PDCCH scrambled by the C-RNTI if the PDCCH scrambled by the RA-RNTI was blindly detected out by the terminal device, and the RAR scheduled by the PDCCH scrambled by the RA-RNTI includes the RAPID corresponding to the preamble.

In the embodiments of the present application, the network device may set a BI value to a reserve value. For example, if an index in Table 1 is 14 or 15, then a four-step RACH UE may deem backoff as 0.

Table 1 Corresponding relationship between the index and a backoff parameter value

| Index | Backoff parameter value (ms) |
|-------|------------------------------|
| 0 | 5 |
| 1 | 10 |
| 2 | 20 |
| 3 | 30 |
| 4 | 40 |
| 5 | 60 |
| 6 | 80 |
| 7 | 120 |
| 8 | 160 |

(continued)

| Index | Backoff parameter value (ms) |
|---|---|
| 9 | 240 |
| 10 | 320 |
| 11 | 480 |
| 12 | 960 |
| 13 | 1920 |
| 14 | Reserved |
| 15 | Reserved |

In the embodiments of the present application, as illustrated in Table 1, a backoff value indicated by a backoff index in the backoff index BI subheader may be a reserve value. At this time, the network device may send the second indication information to the two-step RACH UE while indicating to the four-step RACH UE not backoff, thus avoiding the second indication information from affecting the traditional four-step RACH UE.

It should be understood that in the embodiments of the present application, the timer used for blindly detecting the PDCCH scrambled by the RA-RNTI and the timer used for blindly detecting the PDCCH scrambled by the C-RNTI are the same timer or different timers.

For example, when the timer used for blindly detecting the PDCCH scrambled by the RA-RNTI and the timer used for blindly detecting the PDCCH scrambled by the C-RNTI are different timers, a duration of the timer used for blindly detecting the PDCCH scrambled by the RA-RNTI may be greater than or equal to a duration of the timer used for blindly detecting the PDCCH scrambled by the C-RNTI.

Alternatively, the timer used for blindly detecting the PDCCH scrambled by the C-RNTI is a timer started when or after the PDCCH scrambled by the RA-RNTI was blindly detected out.

For example, the terminal device continues to blindly detect the PDCCH scrambled by the C-RNTI if the PDCCH scrambled by the RA-RNTI was blindly detected out by the terminal device and the RAR scheduled by the PDCCH scrambled by the RA-RNTI includes the RAPID corresponding to the preamble. At this time, the terminal device starts the first timer or the first time window, and stops the timer or the time window used for blindly detecting the PDCCH scrambled by the RA-RNTI; the duration of the first timer or the first time window may be less than or equal to a preset threshold, and a potential C-RNTI schedule is blindly detected in the first timer or the first time window.

In the embodiments of the present application, the timer used for blindly detecting the PDCCH scrambled by the C-RNTI is provided as the timer started when or after the PDCCH scrambled by the RA-RNTI was blindly detected out, which can effectively reduce a power consumption of the terminal device.

The preferred embodiments of the present application are described above in detail in conjunction with the drawings. However, the present application is not limited to the specific details in the above-mentioned embodiments. Within the scope of the technical concept of the present application, various simple variants may be made to the technical solutions of the present application, and such simple variants belong to the scope of protection of the present application.

For example, various specific technical features described in the above-mentioned specific embodiments may be combined in any suitable way if there is no contradiction. In order to avoid unnecessary repetition, various possible combinations will not be explained separately in the present application.

For another example, various different embodiments of the present application may also be combined arbitrarily, as long as they do not violate the idea of the present application, and they should also be regarded as the content disclosed in the present application.

It should be understood that, in various method embodiments of the present application, sequence numbers of the above-mentioned procedures do not mean an execution order. The execution order of each procedure should be determined by its function and internal logic, and should not constitute any limitation to an executing procedure of the embodiments of the present application.

The method embodiments of the present application are described in detail above in conjunction with FIGs. 1 to 7, and apparatus embodiments of the present application will be described in detail below in conjunction with FIGs. 8 to 9.

FIG. 8 is a schematic block diagram of a terminal device 300 according to an embodiment of the present application.

Specifically, as illustrated in FIG. 8, the terminal device 3500 may include:

a communication unit 310, configured to send a preamble and a cell radio network temporary identifier medium access control control element (C-RNTI MAC CE) to a network device, where the C-RNTI MAC CE includes a C-RNTI;
a blind detection unit 320, configured to blindly detect a physical downlink control channel (PDCCH) scrambled by the C-RNTI; and
a determination unit 330, configured to determine whether a contention conflict in a two-step random access procedure has been resolved according to a blind detection result of the C-RNTI.

Optionally, in some possible implementation, the terminal device 300 further includes:
a starting unit, configured to start a first timer or a first time window after the communication unit 310 sends a physical random access channel (PRACH) where the preamble is located and/or a physical uplink shared channel (PUSCH) where the C-RNTI MAC CE is located to the network device.
The blind detection unit 320 is specifically configured to:
blindly detect the PDCCH scrambled by the C-RNTI after starting the first timer or within the first time window.
Optionally, in some possible implementation, a duration of the timer or a duration of the time window is configured by the network device.
Optionally, in some possible implementation, the determination unit 330 is specifically configured to:
determine that the contention conflict has been resolved if the PDCCH scrambled by the C-RNTI was blindly detected by the blind detection unit 320.
Optionally, in some possible implementation, the terminal device further includes:

a decoding unit, configured to decode downlink control information (DCI) in the PDCCH; and
where the DCI includes scheduling information used for scheduling downlink data or uplink data.

Optionally, in some possible implementation, the DCI further includes a time alignment command (TAC).
Optionally, in some possible implementation, when the DCI includes scheduling information used for scheduling a physical downlink shared channel (PDSCH), the PDSCH includes an MAC CE, and the MAC CE includes the time alignment command (TAC).
Optionally, in some possible implementation, the determination unit 330 is specifically configured to:

determine that the contention conflict has not been resolved if the PDCCH scrambled by the C-RNTI was not blindly detected by the blind detection unit 320; and
the communication unit 310 is further configured to:
re-send the preamble and/or the C-RNTI MAC CE to the network device.

Optionally, in some possible implementation, the blind detection unit 320 is further configured to:
blindly detect the PDCCH scrambled by a random access radio network temporary identifier (RA-RNTI).
Optionally, in some possible implementation, the blind detection unit 320 is specifically configured to:
continue to blindly detect the PDCCH scrambled by the C-RNTI if the PDCCH scrambled by the RA-RNTI was blindly detected by the blind detection unit and a random access response (RAR) scheduled by the PDCCH scrambled by the RA-RNTI does not include an RAPID corresponding to the preamble.
Optionally, in some possible implementation, the blind detection unit 320 is specifically configured to:

stop blindly detecting the PDCCH scrambled by the C-RNTI if the PDCCH scrambled by the RA-RNTI was blindly detected by the blind detection unit and a random access response (RAR) scheduled by the PDCCH scrambled by the RA-RNTI includes an RAPID corresponding to the preamble; and
the communication unit 310 is further configured to:
send a message 3 to the network device using the RAR corresponding the RAPID.

Optionally, in some possible implementation, the communication unit 310 is specifically configured to:

acquire uplink grant (UL-Grant) information in the RAR; and
send the message 3 to the network device on a resource indicated by the UL-Grant information.

Optionally, in some possible implementation, the blind detection unit 320 is specifically configured to:

continue to blindly detect the PDCCH scrambled by the C-RNTI if the PDCCH scrambled by the RA-RNTI was blindly detected by the blind detection unit and a random access response (RAR) scheduled by the PDCCH scrambled by the RA-RNTI includes an RAPID corresponding to the preamble; and
the determination unit 330 is specifically configured to:

determine that the contention conflict has been resolved if the PDCCH scrambled by the C-RNTI was blindly detected by the blind detection unit.

Optionally, in some possible implementation, the communication unit 310 is further configured to:

acquire uplink grant (UL-Grant) information in the RAR if the PDCCH scrambled by the C-RNTI was not blindly detected by the blind detection unit 320; and
send message 3 to the network device on a resource indicated by the UL-Grant information.

Optionally, in some possible implementation, the determination unit 330 is further configured to:
determine whether to send message 3 to the network device.
Optionally, in some possible implementation, the determination unit 330 is specifically configured to:

determine not to send the message 3 if the PDCCH scrambled by the C-RNTI was blindly detected by the blind detection unit 320; and/or
determine to send the message 3 if the PDCCH scrambled by the C-RNTI was not blindly detected by the blind detection unit 320.

Optionally, in some possible implementation, the determination unit 330 is specifically configured to:
determine whether to send the message 3 to the network device according to first indication information, the first indication information being carried in the PDCCH scrambled by the C-RNTI.
Optionally, in some possible implementation, the RAR includes second indication information, where the second indication information is used for indicating whether to continue to blindly detect the PDCCH scrambled by the C-RNTI or whether to continue to acquire an RAPID included in the RAR corresponding to the RA-RNTI when the PDCCH scrambled by the RA-RNTI was blindly detected by the terminal device.
Optionally, in some possible implementation, the second indication information is specifically used for indicating to continue to acquire the RAPID included in the RAR corresponding to the RA-RNTI when the PDCCH scrambled by the RA-RNTI was blindly detected by the terminal device, and indicating to the terminal device whether to send the message 3 to the network device on a resource indicated by the UL-Grant information included in the RAR when the RAPID included in the RAR corresponding to the RA-RNTI is the same as the RAPID corresponding to the preamble.
Optionally, in some possible implementation, the second indication information is carried in a backoff index (BI) subheader of a media access control (MAC) protocol data unit (PDU) of the RAR.
Optionally, in some possible implementation, a backoff value indicated by a backoff index in the backoff index (BI) subheader is a reserve value.
Optionally, in some possible implementation, a timer used for blindly detecting the PDCCH scrambled by the RA-RNTI and a timer used for blindly detecting the PDCCH scrambled by the C-RNTI are the same timer or different timers.
Optionally, in some possible implementation, a timer used for blindly detecting the PDCCH scrambled by the C-RNTI is a timer started when or after the PDCCH scrambled by the RA-RNTI was blindly detected.
Optionally, in some possible implementation, the determination unit 330 is further configured to:
determine the RA-RNTI according to a resource for transmitting the C-RNTI MAC CE and/or a resource for transmitting the preamble.
FIG. 9 is a schematic block diagram of a network device 400 according to an embodiment of the present application.
As illustrated in FIG. 4, the network device 400 may include:

a communication unit 410, configured to receive a preamble and a cell radio network temporary identifier medium access control control element (C-RNTI MAC CE) sent by a terminal device, where the C-RNTI MAC CE includes a C-RNTI;
a decoding unit 420, configured to decode the preamble and the C-RNTI MAC CE; and
the communication unit 410 is further configured to send a physical downlink control channel (PDCCH) to the terminal device according to a decoding result of the preamble and a decoding result of the C-RNTI MAC CE.

Optionally, in some possible implementation, the network device further includes:

a starting unit, configured to start a first timer or a first time window after the communication unit receives a physical random access channel (PRACH) where the preamble is located and/or a physical uplink shared channel (PUSCH) where the C-RNTI MAC CE is located; and
where the communication unit 410 is specifically configured to:

send the physical downlink control channel (PDCCH) to the terminal device according to the decoding result of the preamble and the decoding result of the C-RNTI MAC CE after starting the first timer or within the first time window.

Optionally, in some possible implementation, a duration of the timer or a duration of the time window is information configured by the network device to the terminal device

Optionally, in some possible implementation, the communication unit 410 is specifically configured to:
send the PDCCH used for scheduling a random access response (RAR) corresponding to the preamble to the terminal device when the decoding unit decodes the preamble successfully but fails to decode the C-RNTI MAC CE.

Optionally, in some possible implementation, the communication unit 410 is specifically configured to:
send the PDCCH used for scheduling a random access response (RAR) corresponding to the preamble to the terminal device when the decoding unit decodes the preamble successfully and decodes the C-RNTI MAC CE successfully.

Optionally, in some possible implementation, the communication unit 410 is further configured to:
send the PDCCH scrambled by the C-RNTI to the terminal device.

Optionally, in some possible implementation, the PDCCH scrambled by the C-RNTI includes first indication information, and the first indication information is used for indicating to the terminal device whether to send a message 3 to the network device.

Optionally, in some possible implementation, the RAR includes second indication information, where the second indication information is used for indicating whether to continue to blindly detect the PDCCH scrambled by the C-RNTI or whether to continue to acquire an RAPID included in the RAR corresponding to the RA-RNTI when the PDCCH scrambled by the RA-RNTI was blindly detected by the terminal device.

Optionally, in some possible implementation, the second indication information is specifically used for indicating to continue to acquire the RAPID included in the RAR corresponding to the RA-RNTI when the PDCCH scrambled by the RA-RNTI was blindly detected by the terminal device, and to the terminal device whether to send the message 3 to the network device on a resource indicated by UL-Grant information included in the RAR when the RAPID included in the RAR corresponding to the RA-RNTI is the same as the RAPID corresponding to the preamble.

Optionally, in some possible implementation, the second indication information is carried in a backoff index (BI) subheader of a media access control (MAC) protocol data unit (PDU) of the RAR.

Optionally, in some possible implementation, a backoff value indicated by a backoff index in the backoff index (BI) subheader is a reserve value.

It should be understood that the apparatus embodiments and the method embodiments may correspond to each other, and similar descriptions may refer to the method embodiments. Specifically, the terminal device 300 illustrated in FIG. 8 may correspond to a corresponding subject that executes the method 200 of the embodiments of the present application, and the foregoing and other operations and/or functions of each unit in the terminal device 300 are respectively intended to implement corresponding procedures in each method. Similarly, the network device 400 illustrated in FIG. 9 may correspond to a corresponding subject that executes the method 200 in the embodiments of the present application, and the foregoing and other operations and/or functions of each unit in the network device 400 are respectively intended to implement corresponding procedures in each method in FIG. 1, which will not be described here again for brevity.

A communication device of the embodiments of the present application is described above from the perspective of functional modules in conjunction with FIG. 8 and FIG. 9. It should be understood that the functional modules may be implemented in the form of hardware, and may also be implemented in the form of software instructions, and may also be implemented by a combination of the hardware and software modules.

Specifically, each step of the method embodiments in the embodiments of the present application may be implemented by integrated logic circuits of the hardware in a processor and/or instructions in the form of software. The steps of the method disclosed in combination with the embodiments of the present application may be directly implemented as the execution by a hardware decoding processor, or by a combination of the hardware and the software modules in the decoding processor.

Optionally, the software modules may be located in a mature storage medium in the art, such as a random access memory, a flash memory, a read-only memory, a programmable read-only memory or an electrically erasable programmable memory, a register, etc. The storage medium is located in a memory, and the processor reads information in the memory and completes the steps of the above method in combination with its hardware.

For example, the communication unit in the embodiments of the present application may be implemented by a transceiver, and its decoding unit, starting unit, and determination unit may be implemented by the processor.

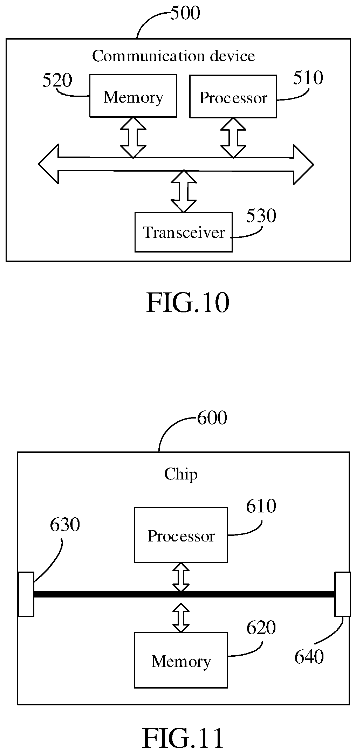

FIG. 10 is a schematic structural diagram of a communication device 500. The communication device 500 illustrated in FIG. 10 includes a processor 510, and the processor 510 may call and run a computer program from a memory to implement the method in the embodiments of the present application.

Optionally, as illustrated in FIG. 10, the communication device 500 may also include a memory 520, the memory 520 may be configured to store indication information, and may also be configured to store codes and instructions executed by the processor 510, where the processor 510 may call and run a computer program from the memory 520 to implement the method in the embodiments of the present application.

The memory 520 may be a separate device independent of the processor 510, and may also be integrated in the processor 510.

Optionally, as illustrated in FIG. 10, the communication device 500 may also include a transceiver 530, and the processor 510 may control the transceiver 530 to communicate with other devices, and specifically, may send information or data to other devices, or receive information or data sent by other devices.

The transceiver 530 may include a transmitter and a receiver. The transceiver 530 may further include an antenna, the number of which may be one or more.

Optionally, the communication device 500 may be the terminal device of the embodiments of the present application, and the communication device 500 may implement the corresponding procedures implemented by the terminal device in each method of the embodiments of the present application, that is, the communication device 500 in the embodiments of the present application may correspond to the terminal device 300 in the embodiments of the present application, and may correspond to the corresponding subject that executes the method 200 according to the embodiments of the present application, which will not be described here again for brevity.

Optionally, the communication device 500 may be the network device in the embodiments of the present application, and the communication device 500 may implement the corresponding procedures implemented by the network device in each method of the embodiments of the present application. That is, the communication device 500 in the embodiments of the present application may correspond to the network device 400 in the embodiments of the present application, and may correspond to the corresponding subject that executes the method 200 according to the embodiments of the present application, which will not be described here again for brevity.

It should be understood that various components in the communication device 500 are connected by a bus system, where in addition to a data bus, the bus system also includes a power bus, a control bus, and a status signal bus.

In addition, the embodiments of the present application also provide a chip. The chip may be an integrated circuit chip with signal processing capability and may implement or execute each method, step and logic block diagram disclosed in the embodiments of the present application.

Optionally, the chip may be applied to various communication devices, so that the communication devices installed with the chip may execute each method, step, and logic block diagram disclosed in the embodiments of the present application.

FIG. 10 is a schematic structural diagram of a chip of an embodiment of the present application.

The chip 600 illustrated in FIG. 10 includes a processor 610, and the processor 610 may call and run a computer program from a memory to implement the method in the embodiments of the present application.

Optionally, as illustrated in FIG. 10, the chip 600 may also include a memory 620, where the processor 610 may call and run a computer program from the memory 620 to implement the method in the embodiments of the present application. The memory 620 may be configured to store indication information, and may also be configured to store codes and instructions executed by the processor 610.

The memory 620 may be a separate device independent of the processor 610, and may also be integrated in the processor 610.

Optionally, the chip 600 may also include an input interface 630, where the processor 610 may control the input interface 630 to communicate with other devices or chips, and specifically, may acquire information or data sent by other devices or chips.

Optionally, the chip 600 may also include an output interface 640, where the processor 610 may control the output interface 640 to communicate with other devices or chips, and specifically, may output information or data to other devices or chips.

Optionally, the chip may be applied to the network device in the embodiments of the present application, and the chip may implement the corresponding procedures implemented by the network device in each method of the embodiments of the present application, which will not be described here again for brevity.

Optionally, the chip may be applied to the terminal device in the embodiments of the present application, and the chip may implement the corresponding procedures implemented by the terminal device in each method of the embodiments of the present application, which will not be described here again for brevity

It should be understood that the chip mentioned in the embodiments of the present application may also be referred to as a system level chip, a system chip, a chip system or a system-on-chip chip, etc. It should also be understood that various components in the chip 600 are connected by a bus system, where in addition to a data bus, the bus system also includes a power bus, a control bus, and a status signal bus.

The processor may include, but is not limited to:

a general-purpose processor, a Digital Signal processor (DSP), an Application Specific Integrated Circuit (ASIC), a Field Programmable Gate Array (FPGA) or other programmable logic devices, discrete gates or transistor logic devices, discrete hardware components, etc.

The processor may be configured to implement or execute each method, step and logic block diagram disclosed in the embodiments of the present application. The steps of the method disclosed in combination with the embodiments of the present application may be directly implemented by a hardware decoding processor, or by a combination of hardware and software modules in the decoding processor. The software module may be located in a mature storage medium of the art, such as a random access memory, a flash memory, a read-only memory, a programmable read-only memory or an electrically erasable programmable memory, a register, etc. The storage medium is located in the memory, and the processor reads information in the memory and completes the steps of the above method in combination with its hardware.

The memory may include, but is not limited to:

a volatile memory and non-volatile memory. The non-volatile memory may be a Read-Only Memory (ROM), a Programmable ROM (PROM), an Erasable PROM (EPROM), an Electrically EPROM (EEPROM) or a flash memory. The non-volatile memory may be a Random Access Memory (RAM) which serves as an external cache. By way of exemplary but not restrictive description, many forms of RAM are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a synch link DRAM (SLDRAM) and a Direct Rambus RAM (DR RAM).

It should be noted that the memories of the system and method described herein are intended to include, but are not limited to these and any other suitable types of memories.

The embodiments of the present application also provide a computer-readable storage medium configured for storing computer programs. The computer-readable storage medium stores one or more programs, and the one or more programs include instructions that, when executed by a portable electronic device that includes multiple application programs, enables the portable electronic device to execute the method of the embodiment illustrated in the method 200.

Optionally, the computer-readable storage medium may be applied to the network device in the embodiments of the present application, and the computer program enables the computer to execute the corresponding procedure implemented by the network device in each method of the embodiments of the present application, which will not be described here again for brevity.

Optionally, the computer-readable storage medium may be applied to the mobile terminal/terminal device in the embodiments of the present application, and the computer program enables the computer to execute the corresponding procedure implemented by the mobile terminal/terminal device in each method of the embodiments of the present application, which will not be described here again for brevity

The embodiments of the present application also provide a computer program product including a computer program.

Optionally, the computer program product may be applied to the network device in the embodiments of the present application, and the computer program instruction enables the computer to execute the corresponding procedure implemented by the network device in each method of the embodiments of the present application, which will not be described here again for brevity.

Optionally, the computer program product may be applied to the mobile terminal/terminal device in the embodiments of the present application, and the computer program instruction enables the computer to execute the corresponding procedure implemented by the mobile terminal/terminal device in each method of the embodiments of the present application, which will not be described here again for brevity.

The embodiments of the present application also provide a computer program. When the computer program is executed by a computer, the computer may execute the method of the embodiment illustrated in the method 200.

Optionally, the computer program may be applied to the network device in the embodiments of the present application, and when the computer program runs on the computer, the computer is caused to execute the corresponding procedure implemented by the network device in each method of the embodiments of the present application, which will not be described here again for brevity.

The embodiments of the present application also provide a communication system, the communication system may include the terminal device 300 illustrated in FIG. 8 and the network device 400 illustrated in FIG. 9. The terminal device 300 may be configured to implement the corresponding function implemented by the terminal device in the above method 200, and the network device 4000 may implement the corresponding function implemented by the network device in the above method 200, which will not be described here again for brevity.

It should be noted that the term "system" and so on herein may also be referred to as "network management architecture" or "network system", or the like.

It should also be understood that the terms used in the embodiments of the present application and the appended claims are only for the purpose of describing specific embodiments, and are not intended to limit the embodiments of the present application.

For example, singular forms of "a", "said", "above" and "the" used in the embodiments of the present application and the appended claims are also intended to include plural forms, unless the context clearly indicates other meanings.

Those skilled in the art may realize that units and algorithm steps of each example described in combination with the embodiments disclosed herein may be implemented by electronic hardware or a combination of computer software and the electronic hardware. Whether these functions are executed by hardware or software depends on specific applications and design constraint conditions of the technical solution. Professionals and technicians may use different methods to implement the described functions for each specific application, but such implementation should not be considered beyond the scope of the embodiments of the present application.

The functions may be stored in a computer-readable storage medium if being implemented in the form of a software functional unit and sold or used as an independent product. Based on such understanding, the essence of the technical solution of the present application or the part contributing to the related art or part of the technical solution may be embodied in the form of a software product, and the computer software product is stored in a storage medium including several instructions such that a computer device (which may be a personal computer, a server, or a network device, etc.) executes all or part of the steps of the method described in each embodiment of the present application. The aforementioned storage medium includes a U disk, a mobile hard disk, a read-only memory (ROM), a random access memory (RAM), a magnetic disk or an optical disk and other mediums that may store program codes.

Those skilled in the art can clearly understand that, for the convenience and conciseness of the description, the specific working procedure of the system, apparatus and unit described above may refer to the corresponding procedure in the aforementioned method embodiments, which will not be described here again for brevity.

In the several embodiments provided by the present application, it should be understood that the disclosed system, apparatus and method may be implemented in other manners.

For example, the division of units or modules or components in the apparatus embodiments described above is merely one kind of logical function division, and there may be other division manners in actual implementation. For example, multiple units or components may be combined or integrated in another system, or some features may be omitted or not executed.

For another example, the units/modules/components described as a separate/displayed component may or may not be physically separated, that is, they may be located in one place, or may be distributed in multiple network units. Some or all of the units/modules/components may be selected according to actual needs to achieve the objectives of the solutions of the embodiments.

Finally, it should be noted that mutual coupling or direct coupling or a communication connection illustrated or discussed above may be indirect coupling or a communication connection through some interfaces, apparatus or units, and may be electrical, mechanical or other forms.

The foregoing descriptions are merely specific implementations of the embodiments of the present application, and the protection scope of the embodiments of the present application is not limited thereto. Any person skilled in the art can easily think of changes or substitutions within the technical scope disclosed in the present application, and all the changes or substitutions should be covered in the protection scope of the present application. Therefore, the protection scope of the present application should be subject to the protection scope of the claims.

**Claims**

1. A method for two-step random access, the method comprising:

    sending, by a terminal device, a preamble and a cell radio network temporary identifier medium access control control element (C-RNTI MAC CE) to a network device, wherein the C-RNTI MAC CE comprises a C-RNTI;
    blindly detecting, by the terminal device, a physical downlink control channel (PDCCH) scrambled by the C-RNTI; and
    determining, by the terminal device, whether a contention conflict in a two-step random access procedure has been resolved according to a blind detection result of the C-RNTI.

2. The method according to claim 1, wherein the method further comprises:

    starting, by the terminal device, a first timer or a first time window after sending a physical random access channel (PRACH) where the preamble is located and/or a physical uplink shared channel (PUSCH) where the C-RNTI MAC CE is located to the network device; and
    wherein blindly detecting, by the terminal device, the physical downlink control channel (PDCCH) scrambled by the C-RNTI comprises:
    blindly detecting, by the terminal device, the PDCCH scrambled by the C-RNT after starting the first timer or within the first time window.

3. The method according to claim 2, wherein a duration of the timer or a duration of the time window is configured by the network device.

4. The method according to any one of claims 1 to 3, wherein determining, by the terminal device, whether the contention conflict in the two-step random access procedure has been resolved according to the blind detection result of the C-RNTI comprises:
determining, by the terminal device, that the contention conflict has been resolved when the PDCCH scrambled by the C-RNTI was blindly detected by the terminal device.

5. The method according to claim 4, wherein the method further comprises:

    decoding, by the terminal device, downlink control information (DCI) in the PDCCH; and
    wherein the DCI comprises scheduling information for scheduling downlink data or uplink data.

6. The method according to claim 5, wherein the DCI further comprises a time alignment command (TAC).

7. The method according to claim 5, wherein the DCI comprises scheduling information for scheduling a physical downlink shared channel (PDSCH), the PDSCH comprises an MAC CE, and the MAC CE comprises the time alignment command (TAC).

8. The method according to any one of claims 1 to 4, wherein determining, by the terminal device, whether the contention conflict in the two-step random access procedure has been resolved according to the blind detection result of the C-RNTI comprises:

    determining, by the terminal device, that the contention conflict has not been resolved when the PDCCH scrambled by the C-RNTI was not blindly detected by the terminal device; and
    the method further comprises:
    re-sending, by the terminal device, the preamble and/or the C-RNTI MAC CE to the network device.

9. The method according to any one of claims 1 to 3, wherein the method further comprises:
blindly detecting, by the terminal device, the PDCCH scrambled by a random access radio network temporary identifier (RA-RNTI).

10. The method according to claim 9, wherein blindly detecting, by the terminal device, the physical downlink control channel (PDCCH) scrambled by the C-RNTI comprises:
continuing to blindly detect, by the terminal device, the PDCCH scrambled by the C-RNTI when the PDCCH scrambled by the RA-RNTI was blindly detected by the terminal device and a random access response (RAR) scheduled by the PDCCH scrambled by the RA-RNTI does not comprise an RAPID corresponding to the preamble.

11. The method according to claim 9 or 10, wherein blindly detecting, by the terminal device, the physical downlink control channel (PDCCH) scrambled by the C-RNTI comprises:

    stopping blindly detecting, by the terminal device, the PDCCH scrambled by the C-RNTI when the PDCCH scrambled by the RA-RNTI was blindly detected by the terminal device and a random access response (RAR) scheduled by the PDCCH scrambled by the RA-RNTI comprises an RAPID corresponding to the preamble; and
    the method further comprises:
    sending, by the terminal device, a message 3 to the network device using the RAR corresponding the RAPID.

12. The method according to claim 11, wherein the method further comprises:

    acquiring, by the terminal device, uplink grant (UL-Grant) information in the RAR; and
    sending, by the terminal device, the message 3 to the network device on a resource indicated by the UL-Grant information.

13. The method according to claim 9, wherein blindly detecting, by the terminal device, the physical downlink control channel (PDCCH) scrambled by the C-RNTI comprises:

    continuing to blindly detect, by the terminal device, the PDCCH scrambled by the C-RNTI when the PDCCH scrambled by the RA-RNTI was blindly detected by the terminal device and a random access response (RAR) scheduled by the PDCCH scrambled by the RA-RNTI comprises an RAPID corresponding to the preamble; and
    wherein determining, by the terminal device, whether the contention conflict in the two-step random access procedure has been resolved according to the blind detection result of the C-RNTI comprises:
determining that the contention conflict has been resolved when the PDCCH scrambled by the C-RNTI was blindly detected by the terminal device.

14. The method according to claim 13, wherein the method further comprises:

acquiring, by the terminal device, uplink grant (UL-Grant) information in the RAR when the PDCCH scrambled by the C-RNTI was not blindly detected by the terminal device; and
sending, by the terminal device, a message 3 to the network device on a resource indicated by the UL-Grant information.

15. The method according to claim 13 or 14, wherein the method further comprises:
determining, by the terminal device, whether to send a message 3 to the network device.

16. The method according to claim 15, wherein determining, by the terminal device, whether to send the message 3 to the network device comprises:

determining, by the terminal device, not to send the message 3 when the PDCCH scrambled by the C-RNTI was blindly detected by the terminal device; and/or
determining, by the terminal device, to send the message 3 when the PDCCH scrambled by the C-RNTI was not blindly detected by the terminal device.

17. The method according to claim 15, wherein determining, by the terminal device, whether to send the message 3 to the network device comprises:
determining, by the terminal device, whether to send the message 3 to the network device according to first indication information, the first indication information being carried in the PDCCH scrambled by the C-RNTI.

18. The method according to any one of claims 9 to 17, wherein the RAR comprises second indication information, wherein the second indication information is used for indicating whether to continue to blindly detect the PDCCH scrambled by the C-RNTI or whether to continue to acquire an RAPID comprised in the RAR corresponding to the RA-RNTI when the PDCCH scrambled by the RA-RNTI was blindly detected by the terminal device.

19. The method according to claim 18, wherein the second indication information is specifically used for indicating to continue to acquire the RAPID comprised in the RAR corresponding to the RA-RNTI when the PDCCH scrambled by the RA-RNTI was blindly detected by the terminal device, and indicating to the terminal device whether to send the message 3 to the network device on a resource indicated by UL-Grant information comprised in the RAR when the RAPID comprised in the RAR corresponding to the RA-RNTI is the same as the RAPID corresponding to the preamble.

20. The method according to claim 18 or 19, wherein the second indication information is carried in a backoff index (BI) subheader of a media access control (MAC) protocol data unit (PDU) of the RAR.

21. The method according to claim 20, wherein a backoff value indicated by a backoff index in the backoff index (BI) subheader is a reserved value.

22. The method according to any one of claims 9 to 21, wherein a timer used for blindly detecting the PDCCH scrambled by the RA-RNTI and a timer used for blindly detecting the PDCCH scrambled by the C-RNTI are the same timer or different timers.

23. The method according to any one of claims 9 to 21, wherein a timer used for blindly detecting the PDCCH scrambled by the C-RNTI is a timer started when or after the PDCCH scrambled by the RA-RNTI was blindly detected.

24. The method according to any one of claims 9 to 23, wherein the method further comprises:
determining, by the terminal device, the RA-RNTI according to a resource for transmitting the C-RNTI MAC CE and/or a resource for transmitting the preamble.

25. A method for two-step random access, the method comprising:

receiving, by a network device, a preamble and a cell radio network temporary identifier medium access control control element (C-RNTI MAC CE) sent by a terminal device, wherein the C-RNTI MAC CE comprises a C-RNTI; decoding, by the network device, the preamble and the C-RNTI MAC CE; and
sending, by the network device, a physical downlink control channel (PDCCH) to the terminal device according to a decoding result of the preamble and a decoding result of the C-RNTI MAC CE.

26. The method according to claim 25, wherein the method further comprises:

starting, by the network device, a first timer or a first time window after receiving a physical random access channel (PRACH) where the preamble is located and/or a physical uplink shared channel (PUSCH) where the C-RNTI MAC CE is located; and
wherein sending, by the network device, the physical downlink control channel (PDCCH) to the terminal device according to the decoding result of the preamble and the decoding result of the C-RNTI MAC CE comprises:
sending, by the network device, the physical downlink control channel (PDCCH) to the terminal device according to the decoding result of the preamble and the decoding result of the C-RNTI MAC CE after starting the first timer or within the first time window.

27. The method according to claim 26, wherein a duration of the timer or a duration of the time window is information configured by the network device to the terminal device.

28. The method according to any one of claims 25 to 27, wherein sending, by the network device, the physical downlink control channel (PDCCH) to the terminal device according to the decoding result of the preamble and the decoding result of the C-RNTI MAC CE comprises:
sending the PDCCH used for scheduling a random access response (RAR) corresponding to the preamble to the terminal device when the network device decodes the preamble successfully but fails to decode the C-RNTI MAC CE.

29. The method according to any one of claims 25 to 27, wherein sending, by the network device, the physical downlink control channel (PDCCH) to the terminal device according to the decoding result of the preamble and the decoding result of the C-RNTI MAC CE comprises:
sending the PDCCH used for scheduling a random access response (RAR) corresponding to the preamble to the terminal device when the network device decodes the preamble successfully and decodes the C-RNTI MAC CE successfully.

30. The method according to claim 29, wherein the method further comprises:
sending, by the network device, the PDCCH scrambled by the C-RNTI to the terminal device.

31. The method according to claim 30, wherein the PDCCH scrambled by the C-RNTI comprises first indication information, and the first indication information is used for indicating to the terminal device whether to send a message 3 to the network device.

32. The method according to any one of claims 28 to 31, wherein the RAR comprises second indication information, wherein the second indication information is used for indicating whether to continue to blindly detect the PDCCH scrambled by the C-RNTI or whether to continue to acquire an RAPID comprised in the RAR corresponding to the RA-RNTI when the PDCCH scrambled by the RA-RNTI was blindly detected by the terminal device.

33. The method according to claim 32, wherein the second indication information is specifically used for indicating to continue to acquire the RAPID comprised in the RAR corresponding to the RA-RNTI when the PDCCH scrambled by the RA-RNTI was blindly detected by the terminal device, and the terminal device whether to send the message 3 to the network device on a resource indicated by UL-Grant information comprised in the RAR when the RAPID comprised in the RAR corresponding to the RA-RNTI is the same as the RAPID corresponding to the preamble.

34. The method according to claim 32 or 33, wherein the second indication information is carried in a backoff index (BI) subheader of a media access control (MAC) protocol data unit (PDU) of the RAR.

35. The method according to claim 34, wherein a backoff value indicated by a backoff index in the backoff index (BI) subheader is a reserved value.

36. A terminal device, comprising:

a communication unit, configured to send a preamble and a cell radio network temporary identifier medium access control control element (C-RNTI MAC CE) to a network device, wherein the C-RNTI MAC CE comprises a C-RNTI;

a blind detection unit, configured to blindly detect a physical downlink control channel (PDCCH) scrambled by the C-RNTI; and

a determination unit, configured to determine whether a contention conflict in a two-step random access procedure has been resolved according to a blind detection result of the C-RNTI.

**37.** The terminal device according to claim 36, wherein the terminal device further comprises:

a starting unit, configured to start a first timer or a first time window after the communication unit sends a physical random access channel (PRACH) where the preamble is located and/or a physical uplink shared channel (PUSCH) where the C-RNTI MAC CE is located to the network device; and

the blind detection unit is specifically configured to:

blindly detect the PDCCH scrambled by the C-RNTI after starting the first timer or within the first time window.

**38.** The terminal device according to claim 37, wherein a duration of the timer or a duration of the time window is configured by the network device.

**39.** The terminal device according to any one of claims 36 to 38, wherein the determination unit is specifically configured to:

determine that the contention conflict has been resolved when the PDCCH scrambled by the C-RNTI was blindly detected by the blind detection unit.

**40.** The terminal device according to claim 39, wherein the terminal device further comprises:

a decoding unit, configured to decode downlink control information (DCI) in the PDCCH; and

wherein the DCI comprises scheduling information for scheduling downlink data or uplink data.

**41.** The terminal device according to claim 40, wherein the DCI further comprises a time alignment command (TAC).

**42.** The terminal device according to claim 40, wherein when the DCI comprises scheduling information for scheduling a physical downlink shared channel (PDSCH), the PDSCH comprises an MAC CE, and the MAC CE comprises the time alignment command (TAC).

**43.** The terminal device according to any one of claims 36 to 39, wherein the determination unit is specifically configured to:

determine that the contention conflict has not been resolved when the PDCCH scrambled by the C-RNTI was not blindly detected by the blind detection unit; and

the communication unit is further configured to:

re-send the preamble and/or the C-RNTI MAC CE to the network device.

**44.** The terminal device according to any one of claims 36 to 38, wherein the blind detection unit is further configured to:

blindly detect the PDCCH scrambled by a random access radio network temporary identifier (RA-RNTI).

**45.** The terminal device according to claim 44, wherein the blind detection unit is specifically configured to:

continue to blindly detect the PDCCH scrambled by the C-RNTI when the PDCCH scrambled by the RA-RNTI was blindly detected by the blind detection unit and a random access response (RAR) scheduled by the PDCCH scrambled by the RA-RNTI does not comprise an RAPID corresponding to the preamble.

**46.** The terminal device according to claim 44 or 45, wherein the blind detection unit is specifically configured to:

stop blindly detecting the PDCCH scrambled by the C-RNTI when the PDCCH scrambled by the RA-RNTI was blindly detected by the blind detection unit and a random access response (RAR) scheduled by the PDCCH scrambled by the RA-RNTI comprises an RAPID corresponding to the preamble; and

the communication unit is further configured to:

send a message 3 to the network device using the RAR corresponding the RAPID.

47. The terminal device according to claim 46, wherein the communication unit is specifically configured to:

acquire uplink grant (UL-Grant) information in the RAR; and
send the message 3 to the network device on a resource indicated by the UL-Grant information.

48. The terminal device according to claim 44, wherein the blind detection unit is specifically configured to:

continue to blindly detect the PDCCH scrambled by the C-RNTI when the PDCCH scrambled by the RA-RNTI was blindly detected by the blind detection unit and a random access response (RAR) scheduled by the PDCCH scrambled by the RA-RNTI comprises an RAPID corresponding to the preamble; and
the determination unit is specifically configured to:
determine that the contention conflict has been resolved when the PDCCH scrambled by the C-RNTI was blindly detected by the blind detection unit.

49. The terminal device according to claim 48, wherein the communication unit is further configured to:

acquire uplink grant (UL-Grant) information in the RAR when the PDCCH scrambled by the C-RNTI was not blindly detected by the blind detection unit; and
send a message 3 to the network device on a resource indicated by the UL-Grant information.

50. The terminal device according to claim 48 or 49, wherein the determination unit is further configured to:
determine whether to send a message 3 to the network device.

51. The terminal device according to claim 50, wherein the determination unit is specifically configured to:

determine not to send the message 3 when the PDCCH scrambled by the C-RNTI was blindly detected by the blind detection unit; and/or
determine to send the message 3 when the PDCCH scrambled by the C-RNTI was not blindly detected by the blind detection unit.

52. The terminal device according to claim 50, wherein the determination unit is specifically configured to:
determine whether to send the message 3 to the network device according to first indication information, the first indication information being carried in the PDCCH scrambled by the C-RNTI.

53. The terminal device according to any one of claims 44 to 52, wherein the RAR comprises second indication information, wherein the second indication information is used for indicating whether to continue to blindly detect the PDCCH scrambled by the C-RNTI or whether to continue to acquire an RAPID comprised in the RAR corresponding to the RA-RNTI when the PDCCH scrambled by the RA-RNTI was blindly detected by the terminal device.

54. The terminal device according to claim 53, wherein the second indication information is specifically used for indicating to continue to acquire the RAPID comprised in the RAR corresponding to the RA-RNTI when the PDCCH scrambled by the RA-RNTI was blindly detected by the terminal device, and the terminal device whether to send the message 3 to the network device on a resource indicated by UL-Grant information comprised in the RAR when the RAPID comprised in the RAR corresponding to the RA-RNTI is the same as the RAPID corresponding to the preamble.

55. The terminal device according to claim 53 or 54, wherein the second indication information is carried in a backoff index (BI) subheader of a media access control (MAC) protocol data unit (PDU) of the RAR.

56. The terminal device according to claim 55, wherein a backoff value indicated by a backoff index in the backoff index (BI) subheader is a reserved value.

57. The terminal device according to any one of claims 44 to 56, wherein a timer used for blindly detecting the PDCCH scrambled by the RA-RNTI and a timer used for blindly detecting the PDCCH scrambled by the C-RNTI are the same timer or different timers.

58. The terminal device according to any one of claims 44 to 56, wherein a timer used for blindly detecting the PDCCH scrambled by the C-RNTI is a timer started when or after the PDCCH scrambled by the RA-RNTI was blindly detected.

**59.** The terminal device according to any one of claims 44 to 58, wherein the determination unit is further configured to: determine the RA-RNTI according to a resource for transmitting the C-RNTI MAC CE and/or a resource for transmitting the preamble.

**60.** A network device, comprising:

a communication unit, configured to receive a preamble and a cell radio network temporary identifier medium access control control element (C-RNTI MAC CE) sent by a terminal device, wherein the C-RNTI MAC CE comprises a C-RNTI;
a decoding unit, configured to decode the preamble and the C-RNTI MAC CE; and
the communication unit is further configured to send a physical downlink control channel (PDCCH) to the terminal device according to a decoding result of the preamble and a decoding result of the C-RNTI MAC CE.

**61.** The network device according to claim 60, wherein the network device further comprises:

a starting unit, configured to start a first timer or a first time window after the communication unit receives a physical random access channel (PRACH) where the preamble is located and/or a physical uplink shared channel (PUSCH) where the C-RNTI MAC CE is located; and
wherein the communication unit is specifically configured to:
send the physical downlink control channel (PDCCH) to the terminal device according to the decoding result of the preamble and the decoding result of the C-RNTI MAC CE after starting the first timer or within the first time window.

**62.** The network device according to claim 61, wherein a duration of the timer or a duration of the time window is information configured by the network device to the terminal device.

**63.** The network device according to any one of claims 60 to 62, wherein the communication unit is specifically configured to:
send the PDCCH used for scheduling a random access response (RAR) corresponding to the preamble to the terminal device when the decoding unit decodes the preamble successfully but fails to decode the C-RNTI MAC CE.

**64.** The network device according to any one of claims 60 to 62, wherein the communication unit is specifically configured to:
send the PDCCH used for scheduling a random access response (RAR) corresponding to the preamble to the terminal device when the decoding unit decodes the preamble successfully and decodes the C-RNTI MAC CE successfully.

**65.** The network device according to claim 64, wherein the communication unit is further configured to:
send the PDCCH scrambled by the C-RNTI to the terminal device.

**66.** The network device according to claim 65, wherein the PDCCH scrambled by the C-RNTI comprises first indication information, and the first indication information is used for indicating to the terminal device whether to send a message 3 to the network device.

**67.** The network device according to any one of claims 63 to 66, wherein the RAR comprises second indication information, wherein the second indication information is used for indicating whether to continue to blindly detect the PDCCH scrambled by the C-RNTI or whether to continue to acquire an RAPID comprised in the RAR corresponding to the RA-RNTI when the PDCCH scrambled by the RA-RNTI was blindly detected by the terminal device.

**68.** The network device according to claim 67, wherein the second indication information is specifically used for indicating to continue to acquire the RAPID comprised in the RAR corresponding to the RA-RNTI when the PDCCH scrambled by the RA-RNTI was blindly detected by the terminal device, and the terminal device whether to send the message 3 to the network device on a resource indicated by UL-Grant information comprised in the RAR when the RAPID comprised in the RAR corresponding to the RA-RNTI is the same as the RAPID corresponding to the preamble.

**69.** The network device according to claim 67 or 68, wherein the second indication information is carried in a backoff index (BI) subheader of a media access control (MAC) protocol data unit (PDU) of the RAR.

70. The network device according to claim 69, wherein a backoff value indicated by a backoff index in the backoff index (BI) subheader is a reserved value.

71. A terminal device, comprising:

a processor, a memory and a transceiver, wherein the memory is configured to store a computer program, and the processor is configured to call and run the computer program stored in the memory, and execute the method according to any one of claims 1 to 24.

72. A network device, comprising:

a processor, a memory and a transceiver, wherein the memory is configured to store a computer program, and the processor is configured to call and run the computer program stored in the memory, and execute the method according to any one of claims 25 to 35.

73. A chip, comprising:

a processor, configured to call and run a computer program from a memory, so that a device installed with the chip executes the method according to any one of claims 1 to 24.

74. A chip, comprising:

a processor, configured to call and run a computer program from a memory, so that a device installed with the chip executes the method according to any one of claims 25 to 35.

75. A computer-readable storage medium, configured to store a computer program, wherein the computer program enables a computer to execute the method according to any one of claims 1 to 24.

76. A computer-readable storage medium, configured to store a computer program, wherein the computer program enables a computer to execute the method according to any one of claims 25 to 35.

77. A computer program product, comprising a computer program instruction, wherein the computer program instruction enables a computer to execute the method according to any one of claims 1 to 24.

78. A computer program product, comprising a computer program instruction, wherein the computer program instruction enables a computer to execute the method according to any one of claims 25 to 35.

79. A computer program, wherein the computer program enables a computer to execute the method according to any one of claims 1 to 24.

80. A computer program, wherein the computer program enables a computer to execute the method according to any one of claims 25 to 35.

100

130

110

120

110

FIG.1

| Terminal device | | Network device |
|---|---|---|
| | 210, Preamble code → | |
| | ← 220, Random access response | |
| | 230, Message 3 → | |
| | ← 240, Contention resolution | |

FIG.2

| E/T/R/R/BI subheader | E/T/RAPID subheader | E/T/RAPID subheader | MAC RAR |
|---|---|---|---|

| MAC subPDU 1 (BI) | MAC subPDU 2 (RAPID ) | MAC subPDU 3 (RAPID and RAR) | MAC subPDU 4 | ... | MAC subPDU n | Padding bits (optional) |
|---|---|---|---|---|---|---|

FIG.3

| E | T | R | R | BI |
|---|---|---|---|----|

## FIG.4

| E | T | RAPID |
|---|---|-------|

## FIG.5

| R | Timing corresponding command | |
|---|---|---|
| Timing alignment command | UL grant | |
| UL grant | | |
| UL grant | | |
| UL grant | | |
| TC-RNTI | | |
| TC-RNTI | | |

## FIG.6

200

| Network device | | Terminal device |

S210, A preamble and a C-RNTI MAC CE, wherein the C-RNTI MAC CE comprises a C-RNTI

S220, Decode the preamble and the C-RNTI MAC CE

S230, Send, according to a decoding result of the preamble and a decoding result of the C-RNTI MAC CE, a PDCCH to the terminal device

S240, Perform blind detection on the PDCCH scrambled by the C-RNTI

S250, Determine, according to a blind detection result of the C-RNTI, whether contention-collision in a two-step random access process has been solved

## FIG.7

300

**Terminal device**

| 310 | 320 | 330 |
| Communication unit | Blind detection unit | Determination unit |

## FIG.8

400

**Network device**

| 410 | 420 |
| Communication unit | Decoding unit |

## FIG.9

500

Communication device

520 Memory      Processor 510

530 Transceiver

FIG.10

600

Chip

630      610 Processor

620 Memory

640

FIG.11

## INTERNATIONAL SEARCH REPORT

| International application No. |
| --- |
| **PCT/CN2019/078782** |

| A. | CLASSIFICATION OF SUBJECT MATTER |
| --- | --- |

H04W 74/08(2009.01)i

According to International Patent Classification (IPC) or to both national classification and IPC

| B. | FIELDS SEARCHED |
| --- | --- |

Minimum documentation searched (classification system followed by classification symbols)

H04W, H04L

Documentation searched other than minimum documentation to the extent that such documents are included in the fields searched

Electronic data base consulted during the international search (name of data base and, where practicable, search terms used)

CPRSABS, CNTXT, CNKI, VEN, USTXT, EPTXT, WOTXT, 3GPP: 两步, 随机接入, 终端, 网络, 基站, 前导, C-RNTI, 小区接入无线网络临时标识, 盲检, 加扰, PDCCH, 物理下行控制信道, RA-RNTI, two steps, random access, UE, terminal, network, base station, preamble, C-RNTI, cell radio network temporary identifier, blind, detect, PDCCH, scramble, physical downlink control channel

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 107872899 A (ZTE CORPORATION) 13 July 2018 (2018-07-13) description, paragraphs [0098]-[0268] | 1-80 |
| X | CN 108271275 A (CHINA ACADEMY OF TELECOMMUNICATIONS TECHNOLOGY) 10 July 2018 (2018-07-10) description, paragraphs [0135]-[0337] | 1-80 |
| X | CN 108282901 A (CHINA ACADEMY OF TELECOMMUNICATIONS TECHNOLOGY) 13 July 2018 (2018-07-13) description, paragraphs [0237]-[0466] | 1-80 |
| X | CN 108282899 A (CHINA ACADEMY OF TELECOMMUNICATIONS TECHNOLOGY) 13 July 2018 (2018-07-13) description, paragraphs [0081]-[0183] | 1-80 |

☐ Further documents are listed in the continuation of Box C.　　☑ See patent family annex.

| * | Special categories of cited documents: | | |
| --- | --- | --- | --- |
| "A" | document defining the general state of the art which is not considered to be of particular relevance | "T" | later document published after the international filing date or priority date and not in conflict with the application but cited to understand the principle or theory underlying the invention |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **19 May 2019** | **31 May 2019** |

| Name and mailing address of the ISA/CN | Authorized officer |
| --- | --- |
| **China National Intellectual Property Administration (ISA/ CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2019/078782** |

| Patent document cited in search report | | | Publication date (day/month/year) | Patent family member(s) | | | Publication date (day/month/year) |
| --- | --- | --- | --- | --- | --- | --- | --- |
| CN | 107872899 | A | 13 July 2018 | WO | 2018054163 | A1 | 29 March 2018 |
| CN | 108271275 | A | 10 July 2018 | WO | 2018127226 | A1 | 12 July 2018 |
| CN | 108282901 | A | 13 July 2018 | WO | 2018127240 | A1 | 12 July 2018 |
| CN | 108282899 | A | 13 July 2018 | WO | 2018127244 | A1 | 12 July 2018 |

Form PCT/ISA/210 (patent family annex) (January 2015)